Europäisches Patentamt

European Patent Office

Office européen des brevets

(11) Publication number: **0 445 849 B1**

(12) **EUROPEAN PATENT SPECIFICATION**

(45) Date of publication of patent specification: **24.08.94**　(51) Int. Cl.⁵: **A23D 7/00**

(21) Application number: **91200127.8**

(22) Date of filing: **23.01.91**

(54) **Edible emulsions.**

(30) Priority: **29.01.90 GB 9001961**

(43) Date of publication of application:
**11.09.91 Bulletin 91/37**

(45) Publication of the grant of the patent:
**24.08.94 Bulletin 94/34**

(84) Designated Contracting States:
**AT BE CH DE DK ES FR GB GR IT LI NL SE**

(56) References cited:
**EP-A- 0 089 082**
**EP-A- 0 209 176**
**US-A- 4 341 813**

(73) Proprietor: **UNILEVER N.V.**
**Weena 455**
**NL-3013 AL Rotterdam (NL)**

(84) Designated Contracting States:
**BE CH DE DK ES FR GR IT LI NL SE AT**

(73) Proprietor: **UNILEVER PLC**
**Unilever House**
**Blackfriars**
**P.O. Box 68**
**London EC4P 4BO (GB)**

(84) Designated Contracting States:
**GB**

(72) Inventor: **Out, Dirk Johan Peter, Unilever Research Lab.**
**Olivier van Noortlaan 120**
**Vlaardingen (NL)**

(74) Representative: **Mulder, Cornelis Willem Reinier, Dr. et al**
**UNILEVER N.V.**
**Patent Division**
**P.O. Box 137**
**NL-3130 AC Vlaardingen (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to edible spreads and in particular to spreads of which the major component is a single triacylglycerol.

Edible oils and fats obtained from plant or animal sources comprise a plurality of distinct triglycerides. The most commonly occurring fatty acid residues in these triglycerides are those of 16-carbon palmitic acid and the 18-carbon stearic, oleic, linoleic acids. For convenience these are referred to hereafter as P,S,O and L fatty acids or residues, unless otherwise stated. Other fatty acids occur in edible oils and fats, but the invention will be described with particular reference to fats containing the above-mentioned fatty acids.

The component glycerides of common fats differ widely in fatty acid content such that some fats are rich in P (e.g. palm oil), some are rich in O (e.g. olive oil) and some are rich in L (e.g. safflower oil).

The component glycerides of fats also differ in glyceride stereochemistry, such that where for example S2L is present, the proportion of SSL to SLS is not 2:1 as would be expected by a random distribution of the L residues. In cocoa butter for example, most triglycerides have O in the 2-position and P or S in the 1- and 3-positions. For the purposes of the present specification positional isomers such as SSL and SLS are considered to be different triglycerides.

A notation used for the identification of triglycerides is the so-called 'carbon-number'. This number is the sum of the chain lengths of the three fatty acid chains and is always three carbons less than the total carbon atom content of the triglyceride molecule.

In order to illustrate how far from random the distribution of residues is, further details of the major triglycerides of commonly used edible fats and oils are given in the following table. In this table 'S' is used to mean any fully saturated fatty acid residue, i.e. mostly palmitic plus stearic acids, except for cocoa butter and palm oil where separate data are available. This information is taken from Gunstone, Harwood and Padley "The Lipid Handbook" (pub. Chapman, 1986).

```
Safflower Oil   47% LLL,   19% LLO,   18% LLS,    7% LOS
Olive Oil       39% OOO,   26% SOO,   13% LOO,    5% OLO
Sunflower Oil   39% LLO,   19% LOO,   14% LLS,   14% LLL
Cocoa Butter    35% POS,   25% SOS,   12% POP,    5% SOO
Palm Oil        25% POP,   18% POO,    7% OPO,    6% PPP
Maize Oil       21% LLO,   17% LLS,   17% LOS,   15% LLL
Soyabean Oil    16% LLO,   15% LLL,   13% LLS,   12% LOS
```

The stereochemistry of the glycerides in part determines the crystal habit of the fat comprising the glyceride. The predominance of sat-mono-sat in cacao butter (totalling 72%) is one reason why it is suitable as a chocolate fat. In general it can be seen that available fats and oils each comprise a broad range of triglycerides.

Industrial modification of fats may alter the proportions of triglycerides present. Interesterification, usually combined with fractionation, alters the distribution of the fatty acid residues on the glycerol molecule. My means of such a process it is possible to prepare fat blends enriched in a particular class of triglyceride. For example EP 0209176 discloses the use in edible emulsions of hardstock fats prepared by the selective action of a lipase on a feedstock. The product of the enzymic modification is subjected to fractionation and a mid-fraction recovered. This mid-fraction can contain 70% or more of a H2M fraction and 80% or more of the H2M fraction is in the HHM configuration. In this instance H can be any one of several long-chain saturated fatty acids (C16-C24) and M can be one of several shorter chain fatty acids, typically a twelve or fourteen carbon fatty acid. The hardstock is used at low levels in combination with other (randomised) oils and fats to give a product with low levels of any particular triglyceride.

Although the common fatty acids (P,S,O and L) are few in number and reasonably similar in chemistry, the nutritional effects of intake differ significantly. The current medical view is that for the normal individual, total diet should not be excessive in intake of saturates, or polyunsaturated. For some individuals, with rare disorders in fat metabolism, more stringent diets are recommended.

For example, individuals with X-linked Adrenoleukodystrophy, cannot metabolise long-chain saturated fats. In these cases, ingestion of palmitic and stearic acids results in production and build-up of long-chain fats in the tissues with deleterious effects, up to and including premature death. If the diet of these individuals is restricted to exclude exogenous fats, endogenous fatty acid are synthesised and lead to the same results. Other disorders, necessitate the intake of so-called 'medium chain triglycerides', that is fatty acids with 8-12 carbon atoms.

Spread manufacturers have prepared spreads with narrow range of triglycerides present. The so-called 'MCT' spreads contain only medium chain triglycerides as mentioned above.

Differentiating and selecting triglycerides by carbon number for use in spreads is known in the art. EP-A-0089082 discloses for example a fat blend for use in spreads comprising 4-30% and preferably 4-12% of a hardstock comprising 55-100% triglycerides of carbon numbers 44 to 48, 0-45% triglycerides of carbon numbers 34-42 and 0-45% triglycerides of carbon numbers 50-54, obtainable by chemical synthesis of glycerol with a fatty acid mixture or by random esterification of fully or partially hydrogenated natural fats, resulting in rather complex mixtures of triglycerides.

Pure triglycerides can be prepared by a number of routes and triglycerides such as glyceroltripalmitate or tripalmitin and glyceroltrioleate ore triolein are available in the marketplace.

The present invention provides an edible spread of which 50-100 wt% of the fat phase comprises a single triglyceride having a carbon number in the range 46-70 inclusive and preferably in the range 48-60 inclusive.

Such spreads find particular application in the treatment of clinical conditions exhibiting aberrant fat metabolism. However, spreads according to the present application are also suitable for consumption by individuals not exhibiting aberrant fat metabolism. Indeed, it has become the practice in some countries that manufacture of spreads falling outside of the scope of the present invention for use by those exhibiting aberrant fat metabolism is not carried out for profit as the product volumes involved are too low.

Typically, the single triglyceride is glyceroltrioleate.

In a preferred embodiment of the invention the fat phase essentially comprises pure glyceroltrioleate. In this regard 'essentially pure' is defined as containing less than 10% of other fats, preferable less than 5% of other fats.

While the above mentioned fat phases can be prepared by admixture of chemically synthesised triglycerides, the use, as those fat phases, of fats obtained from genetically modified oilcrops is not excluded. An advantage of using natural sources is that natural fats commonly have a non-random distribution of unlike fatty acid residues on the glycerol backbone, thus it is envisaged that spreads can be prepared which contain triglycerides consisting of at least 50% of one of the triglycerides listed below.

For convenience, some triglycerides (TAG) having carbon number greater than 45 are listed below:

| TAGs: | |
|---|---|
| LLL,LLS,LSL,LLO,LOL,LOO,OLO | = 54 |
| LSS,SLS,LOS,LSO,SLO,SOO,OSO | = 54 |
| OOO,SSS | = 54 |
| LLP,LSP,SLP,LOP,OLP,OOP,SSP | = 52 |
| LPL,LPS,LPO,OPO,SPS,SPO | = 52 |

Although the examples following hereafter relate to both water-continuous and fat continuous spreads comprising a relatively high level of fat (circa 70% on product), it is envisaged that spreads within the scope of the present invention can comprise from 85% to approaching zero fat. It is further envisaged that a part of the fat present may be replaced by a suitable fat replacer, such as a sugar fatty-acid ester.

In embodiments of the present invention water-continuous high fat spreads comprising more than 65% fat dispersed in an aqueous medium are particularly preferred. In the event that the spread is fat continuous it is convenient to employ a hardstock component to structure the product. Suitable hardstock components comprising interesterified blends of palm and palm kernel oils are known in the art, and can be employed at levels of 5-50% depending on the properties of the hardstock.

Consequently a further aspect of the present invention provides edible spreads comprising a dispersion of an aqueous phase in a fat phase which fat phase comprises 50-95% of a single triglyceride oil liquid at 20°C having a carbon number in the range 47-70 and 5-50% of a hardstock component.

It is preferable to use a low-level hardstock suitable for use at a level of 4-15% on fat phase.

It is also preferable that embodiments of present invention employ a fat phase which is essentially free of trans fatty acids. In these embodiments, the invention provides edible spreads comprising a dispersion of an aqueous phase in a fat phase, which fat phase comprises 50-90% of a single triglyceride having a carbon number in the range 47-70 and the said fat phase is essentially free of trans fatty acids.

In this context "essentially free" can be understood as meaning that the spread contains less than 5% and preferably less than 1% trans fatty acids.

Moreover it is desirable that the level of saturated fat in compositions according to the present invention be minimised. Consequently the invention provides edible spreads comprising a dispersion of an aqueous phase in a fat phase, which the fat phase comprises 50-90% of a single triglyceride having a carbon number in the range 47-70 and the said fat phase comprises less than 10% of saturated fats acids.

In a particular embodiment of the present invention as illustrated hereafter by way of example and in other embodiments of the invention, it is preferable that spreads are provided which comprise less than 10% on fat phase of the sum of trans fatty acids and saturated fatty acids.

EXAMPLE 1:

A water-continuous spread was prepared with the following composition:

| Glyceroltrioleate: | | 68% |
|---|---|---|
| Water | : | 21% |
| Lactose | : | 3.5% |
| Glycerol | : | 2.5% |
| Sodium Caseinate | : | 2.0% |
| NaCl | : | 1.0% |
| Na2HPO4.2H2O | : | 0.3% |
| CMC | : | 0.2% |
| K-sorbate | : | 0.13% |
| beta-carotene | : | 0.04% |
| EDTA | : | 0.008% |
| Vitamine A | : | trace |
| Vitamine D | : | trace |
| Flavour | : | trace |

The spread was prepared as follows:

The potassium sorbate was dissolved in water at 20°C. To this solution was added the sodium caseinate and CMC. The admixture was processed through an "ULTRA TURRAX" (RTM) mixer and the pH adjusted to 4.7. This aqueous phase was Pasteurised for 5 minutes at 80-82°C and cooled to 40°C, at which temperature the glycerol and remaining dry ingredients were added, together with the vitamins. This aqueous phase was processed once more through the "ULTRA TURRAX" mixer, and the fat phase added, together with colour and flavour. The complete mixture was homogenised in a "PRESTO" (RTM) colloid mill at 50°C, filled in pots and stored at 5°C.

The products exhibited acceptable stability at 5°C and 20°C.

4

EXAMPLE 2:

A fat-continuous spread was prepared with the following composition:

| Fat phase: | |
|---|---|
| Glyceroltrioleate | 89.5% |
| Interesterified palm fats | 10.5% |
| (Total fat | 79.55%) |
| Lecithin | 0.15% |
| B-Carotene (0.4%) | 0.10% |
| Water | 19.4% |
| Skim milk powder | 0.3% |
| NaCl | 0.2% |
| K-sorbate | 0.10% |
| Flavour | trace |
| pH (lactic acid) | 4.7% |

The spread was prepared by the following method. All components of the spread were mixed together to form a premix at a temperature of 55 °C.

The premix was pumped at rate of 4.5 kg/h into a first "VOTATOR" A-unit rotating at 800 rpm with a cooling jacket temperature of -8 °C, an annulus of 3mm spacing and a residence time of 15 seconds. The process stream outlet temperature for this unit was approximately 12.5 °C.

From the first A-unit the process stream flowed to a second "VOTATOR" A-unit rotating at 800 rpm with a cooling jacket temperature of -3 °C, an annulus of 3mm spacing and a residence time of 15 seconds. The process stream outlet temperature for this unit was approximately 4.8 °C.

From the second A-unit the process stream was pumped to a "VOTATOR" C-unit rotating at 250 rpm with a cooling jacket temperature of +13 °C, a volume of 100ml and a residence time of 120 seconds. The process stream outlet temperature for this unit was approximately 8.5 °C.

The product was filled into tubs.

The following physical properties [I] were measured for the product according to the invention. Comparative example [C] lists the corresponding figures for a product which was similar to the product according to the invention except in that sunflower oil was used as the bulk of the oil phase.

| Sample | C | I |
|---|---|---|
| **Solids content at stated temperature (%):** | | |
| N-10 | 7.4 | 9.1 |
| N-20 | 5.4 | 5.9 |
| N-30 | 3.9 | 2.9 |
| N-35 | 2.5 | 1.6 |
| | | |
| **Stevens value for consistency at temperature:** | | |
| S-05 | 47 | 20 |
| S-10 | 44 | 25 |
| S-15 | 47 | 35 |
| S-20 | 32 | 22 |

Product [I] was quite acceptable for use as a spread.

**Claims**

1. Edible spread comprising a fat phase and an aqueous phase CHARACTERISED IN THAT 50-100wt% of the fat phase comprises a single triglyceride having a carbon number in the range 46-70 inclusive.

2. Spread according to claim 1 wherein the carbon number of said single triglyceride is in the range 48-60 inclusive.

3. Spread according to claim 1 wherein the single triglyceride is glycerol-trioleate.

4. Spread according to claim 1 wherein the fat phase comprises essentially pure glycerol-trioleate.

5. Spread according to any of claims 1-4 comprising a plastified emulsion of an aqueous phase in a fat phase.

6. Spread according to any of claims 1-4 comprising a plastified emulsion of a fat phase in an aqueous phase.

7. Spread according to any one of claims 1-6 wherein the single triglyceride comprises LLL, LLS, LSL, LLO, LOL, LOO, OLO, LSS, SLS, LOS, LSO, SLO, SOO, OSO, OOO, SSS, LLP, LSP, SLP, LOP, OLP, OOP, SSP, LPL, LPS, LPO, OPO, SPS, or SPO, wherein L, S, O and P stand for linoleic, stearic, oleic and palmitic acid respectively.

8. Spread according to one of the preceding claims comprising a dispersion of an aqueous phase in a fat phase CHARACTERISED IN THAT the fat phase comprises 50-95wt% of a single triglyceride oil liquid at 20°C having a carbon number in the range 47-70 and 5-50wt% of a hardstock component.

9. Spread according to claim 9, CHARACTERISED IN THAT it contains 4-15% hardstock on fat phase.

10. Spread according to any one of claims 1-5 and 7 comprising a dispersion of an aqueous phase in a fat phase, CHARACTERISED IN THAT the fat phase comprises 50-90wt% of a single triglyceride having a carbon number in the range 47-70 and the said fat phase is essentially free of trans fatty acids.

11. Spread according to any one of claims 1-5 and 7 comprising a dispersion of an aqueous phase in a fat phase, CHARACTERISED IN THAT the fat phase comprises 50-90wt% of a single triglyceride having a carbon number in the range 47-70 and the said fat phase comprises less than 10wt% on fat phase of saturated fatty acids.

12. Spread according to claim 10 and claim 11 which comprises less than 10wt% on fat phase of the sum of trans fatty acids and saturated fatty acids.

**Patentansprüche**

1. Eßbarer Aufstrich, umfassend eine Fettphase und eine wäßrige Phase, dadurch gekennzeichnet, daß 50 bis 100 Gew.-% der Fettphase ein einzelnes Triglycerid mit einer Kohlenstoffzahl im Bereich von 46 bis einschließlich 70 umfassen.

2. Aufstrich nach Anspruch 1, bei dem die Kohlenstoffzahl des einzelnen Triglycerids im Bereich von 48 bis einschließlich 60 liegt.

3. Aufstrich nach Anspruch 1, bei dem das einzelne Triglycerid Glyceroltrioleat ist.

4. Aufstrich nach Anspruch 1, bei dem die Fettphase im wesentlichen reines Glyceroltrioleat umfaßt.

5. Aufstrich nach irgendeinem der Ansprüche 1 bis 4, umfassend eine plastifizierte Emulsion einer wäßrigen Phase in einer Fettphase.

6. Aufstrich nach irgendeinem der Ansprüche 1 bis 4, umfassend eine plastifizierte Emulsion einer Fettphase in einer wäßrigen Phase.

7. Aufstrich nach irgendeinem der Ansprüche 1 bis 6, bei dem das einzelne Triglycerid LLL, LLS, LSL, LLO, LOL, LOO, OLO, LSS, SLS, LOS, LSO, SLO, SOO, OSO, OOO, SSS, LLP, LSP, SLP, LOP, OLP, OOP, SSP, LPL, LPS, LPO, OPO, SPS oder SPO umfaßt, worin L, S, O und P für Linol-, Stearin-, Öl- bzw. Palmitinsäure stehen.

8. Aufstrich nach irgendeinem der vorhergehenden Ansprüche, umfassend eine Dispersion einer wäßrigen Phase in einer Fettphase, dadurch gekennzeichnet, daß die Fettphase 50 bis 95 Gew.-% eines einzelnen bei 20°C flüssigen Triglyceridöles mit einer Kohlenstoffzahl in Bereich von 47 bis 70 und 5 bis 50 Gew.-% einer hochschmelzenden Fettkomponente umfaßt.

9. Aufstrich nach Anspruch 9, dadurch gekennzeichnet, daß er 4 bis 15 %, bezogen auf die Fettphase, hochschmelzende Fettkomponente enthält.

10. Aufstrich nach irgendeinem der Ansprüche 1 bis 5 und 7, umfassend eine Dispersion einer wäßrigen Phase in einer Fettphase, dadurch gekennzeichnet, daß die Fettphase 50 bis 90 Gew.-% eines einzelnen Triglycerids mit einer Kohlenstoffzahl im Bereich von 47 bis 70 umfaßt und die Fettphase im wesentlichen von trans-Fettsäuren frei ist.

11. Aufstrich nach irgendeinem der Ansprüche 1 bis 5 und 7, umfassend eine Dispersion einer wäßrigen Phase in einer Fettphase, dadurch gekennzeichnet, daß die Fettphase 50 bis 90 Gew.-% eines einzelnen Triglycerids mit einer Kohlenstoffzahl im Bereich von 47 bis 70 umfaßt und die Fettphase weniger als 10 Gew.-%, bezogen auf die Fettphase, gesättigte Fettsäuren umfaßt.

12. Aufstrich nach Anspruch 10 und 11, der weniger als 10 Gew.-%, bezogen auf die Fettphase, der Summe von trans-Fettsäuren und gesättigten Fettsäuren umfaßt.

## Revendications

1. Pâte à tartiner comestible comprenant une phase grasse et une phase aqueuse, caractérisée en ce que 50-100 % en poids de la phase grasse comprennent un triglycéride simple ayant un nombre de carbones compris dans l'intervalle 46-70, bornes incluses.

2. Pâte à tartiner selon la revendication 1, dans laquelle le nombre de carbones dudit triglycéride simple est compris dans l'intervalle 48-60, bornes incluses.

3. Pâte à tartiner selon la revendication 1, dans laquelle le triglycéride simple est le trioléate de glycérol.

4. Pâte à tartiner selon la revendication 1, dans laquelle la phase grasse comprend essentiellement du tholéate de glycérol pur.

5. Pâte à tartiner selon l'une quelconque des revendications 1-4, qui comprend une émulsion plastifiée d'une phase aqueuse dans une phase grasse.

6. Pâte à tartiner selon l'une quelconque des revendications 1-4, qui comprend une émulsion plastifiée d'une phase grasse dans une phase aqueuse.

7. Pâte à tartiner selon l'une quelconque des revendications 1-6, dans laquelle le triglycéride simple comprend LLL, LLS, LSL, LLO, LOL, LOO, OLO, LSS, SLS, LOS, LSO, SLO, SOO, OSO, OOO, SSS, LLP, LSP, SLP, LOP, OLP, OOP, SSP, LPL, LPS, LPO, OPO, SPS ou SPO, ou L, S, O et P représentent respectivement les acides linoléique, stéarique, oléique et palmitique.

8. Pâte à tartiner selon l'une quelconque des revendications précédentes, qui comprend une dispersion d'une phase aqueuse dans une phase grasse, caractérisée en ce que la phase grasse comprend 50-95 % en poids d'une huile de triglycéride simple liquide à 20° C ayant un nombre de carbones compris dans l'intervalle 47-70 et 5-50 % en poids d'un composant de matière dure.

**9.** Pâte à tartiner selon la revendication 9, caractérisée en ce qu'elle contient 4-15 % de matière dure vis-à-vis de la phase grasse.

**10.** Pâte à tartiner selon l'une quelconque des revendications 1-5 et 7 qui comprend une dispersion d'une phase aqueuse dans une phase grasse, caractérisée en ce que la phase grasse comprend 50-90 % en poids d'un triglycéride simple ayant un nombre de carbones compris dans l'intervalle 47-70 et en ce que ladite phase grasse est pratiquement exempte d'acides gras <u>trans</u>.

**11.** Pâte à tartiner selon l'une quelconque des revendications 1-5 et 7 qui comprend une dispersion d'une phase aqueuse dans une phase grasse, caractérisée en ce que la phase grasse comprend 50-90 % en poids d'un triglycéride simple ayant un nombre de carbones compris dans l'intervalle 47-70 et en ce que ladite phase grasse comprend moins de 10 % en poids vis-à-vis de la phase grasse d'acides gras saturés.

**12.** Pâte à tartiner selon la revendication 10 et la revendication 11, qui comprend moins de 10 % en poids vis-à-vis de la phase grasse de la somme des acides gras <u>trans</u> et des acides gras saturés.